(19)

Europäisches
Patentamt
European
Patent Office
Office européen
des brevets

(11)  **EP 2 199 982 A1**

(12)  # EUROPEAN PATENT APPLICATION

(43) Date of publication:
**23.06.2010 Bulletin 2010/25**

(51) Int Cl.:
***G06T 7/20*** *(2006.01)*

(21) Application number: **08172389.2**

(22) Date of filing: **19.12.2008**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(71) Applicant: **Nederlandse Organisatie voor
toegepast
-natuurwetenschappelijk onderzoek TNO
2628 VK Delft (NL)**

(72) Inventor: **Esteban, Isaac
2134 XW Hoofddorp (NL)**

(74) Representative: **Hatzmann, Martin et al
Vereenigde
Johan de Wittlaan 7
2517 JR Den Haag (NL)**

(54)  **Method and apparatus for measuring the trajectory of a vehicle**

(57)  Measurements of a trajectory of a vehicle are corrected when it is detected that the vehicle has travelled along a loop, returning to an earlier position. A first estimate of the trajectory of a vehicle is obtained from measurements that provide temporally localized indications of position changes of the vehicle. During travel along the trajectory images are captured from the vehicle. A search is made for images with matching content to detect closure of the loop. A corrected estimate of the trajectory is determined that accounts for the completion of the loop. The distribution density of the correction is at least partly controlled by a measure of curvature, so that the corrections are concentrated at high curvature. Thus, correction artifacts in straight trajectory parts, such as during travel along a street, are avoided. The measure of curvature of the trajectory may be provided using image based measurements or from additional heading measurements.

Fig.1

**EP 2 199 982 A1**

**Description**

Field of the invention

The invention relates to measurement of the trajectory of a vehicle from images of the environment of the vehicle along the trajectory.

Background

Simultaneous Localization and Mapping (SLAM) provides for a technique to map an environment with a moving camera. An overview of SLAM techniques is published in two articles titled: Simultaneous Localization and Mapping (SLAM) part I/II, by T. Bailey and H. Durrant-Whyte and published in the Robotics and Automation Magazine 2006. In SLAM a vehicle carried camera is used to construct a composite image of an environment and to determine the location of the vehicle in the environment. The vehicle uses an image processing circuit to detect matches between areas in successive images from the camera and to estimate position changes of the vehicle from the offset between the matching areas. A trajectory of the vehicle can be estimated from a series of position changes. Unfortunately, inaccuracy of the estimated position changes may result in a cumulative error in the positions in the estimated trajectory.

The term "loop closure" is used in the SLAM art to indicate the event that the vehicle crosses an earlier part of its trajectory. Loop closure can be used to reset the errors. This use of loop closure is described in an article titled "Exactly sparse delayed state filters for view based SLAM, by R.Eustice, J.Leonard and H Singh in the IEEE Transactions on robotics 2006. When the vehicle returns to an earlier position along the trajectory, the effect of accumulation of errors in the estimated position changes can be reduced. Return to an earlier position can be determined by detection of matching image areas in images taken at distant time points. An estimate of the entire trajectory between those time points can then be taken by determining the set of most likely actual position changes along the trajectory in view of a probability distribution of the position changes derived from matching image areas, under the constraint that the trajectory returns to the earlier position.

In this way a trajectory with reduced position errors can be obtained, but it has been found that significant errors may remain in the part of the trajectory within the loop.

Summary

The invention aims to improve the accuracy of the estimation of the trajectory in this context.

A method of measuring a trajectory of a vehicle is provided that comprises detection of loop closure by means of image matching and correction of a measured trajectory using the detected loop closure to make the second estimate consistent with the detected loop. To perform the correction a measure of curvature of the trajectory is computed and used to control at least partly the distribution of the correction over a time interval between the beginning and end of the detected loop. Corrections are concentrated at time points for which high curvature has been computed. Thus a reduction of curvature artifacts in the trajectory is realized in sections where the real trajectory is straight.

In an embodiment the required measure of curvature of the trajectory of the vehicle is derived from output of a heading sensor such as an electronic compass or wheel turning sensor, or directly from image matching. The actual trajectory is not needed to determine curvature in this way. Thus a highly reliable correction may be obtained with little computational overhead.

In an embodiment, a set of corrected position changes along the trajectory is estimated that optimizes a likelihood function that is defined as a function of the corrected position changes. A likelihood function may be used that involves a weighted sum of squares of differences between the corrected position changes and the position changes derived from image matching. In this embodiment, the weights in the sum at positions of detected curves are reduced relative to the weights at positions along straighter parts of the trajectory, as a function of the measure of curvature.

Brief description of the drawing

These and other objects ands advantageous aspects will become apparent from a description of exemplary embodiments, using the following figures.

Figure 1    shows a vehicle with a camera
Figure 2    shows a flow chart of position estimation
Figure 3    shows a flow chart of position estimation

Detailed description of exemplary embodiments

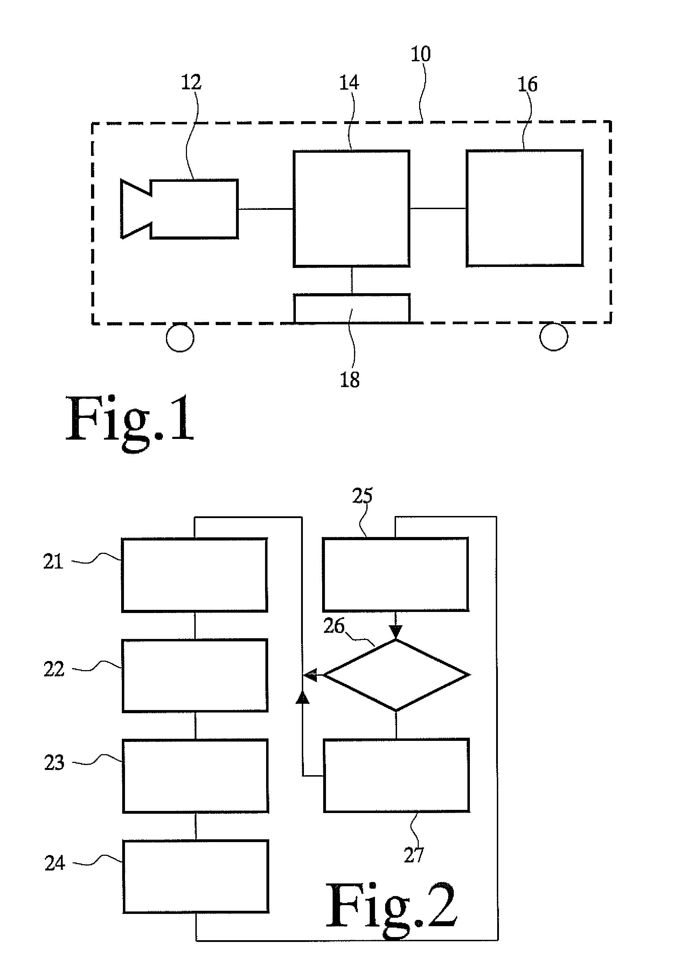

Figure 1 shows a vehicle 10, comprising a camera 12, a data processing circuit 14, a memory 16 and a movement sensor 18. Data processing circuit 14 is coupled to camera 12, memory 16 and movement sensor 18.

In operation vehicle 10 moves around in an environment. This results in series of positions R(t) of the position R of vehicle 10 for time values "t". More generally, the symbol R may be used to denote "poses" during movement. A pose of vehicle 10 comprises a representation of a position of vehicle, and optionally it may also comprise a representation of orientation of vehicle 10. Movement of vehicle 10 results in pose changes, denoted by DR(t), between successive time instants corresponding to a trajectory, .e. a set of pose values R(t) for a range of time points.

At different time points along the trajectory data processing circuit 14 captures images from camera 12. Although by way of example a television camera 12 may be used, it should be appreciated that other types of image capture devices may be used instead, or in addition, such as a distance image sensor like a radar or an optical scanner. Furthermore, although not shown, on or more additional environmental sensors may be present in vehicle 10 that perform further measurements along the trajectory, such as temperature measurements, sound measurements etc.

It is desirable to relate the captured images and/or further measurements accurately to positions and optionally headings along the trajectory. Data processing circuit 12 may receive information about pose changes from movement sensor 18. This may include information about distance travelled, speed, obtained from measurements of wheel revolutions and/or direction changes of the vehicle for example. The information from movement sensor 18 may be used to compute estimates of pose changes DR(ti) at successive time points "ti". Measurements of direction changes may include wheel-turn sensor data, magnetic or inertial compass data etc.

Positions and optionally headings, i.e. pose values may also be estimated from the images themselves. Methods to determine pose changes from images do so are known per se and will therefore not be described in detail. Briefly, the movement of vehicle 10 causes the content of the images to translate and rotate as a whole due to rotation of vehicle 10 relative to the environment. Also different image parts may shift and rotate relative to each other due to motion relative to objects that are visible in the image parts. For small rotation steps, the main effect of rotation amounts to shift of the position of the same image content from one image to the other. Such shift also occurs due to translation. In an embodiment data processing circuit 14 is configured to search for matching content in pairs of images, to determine the amount of shift. Data processing circuit 14 uses the shift in the movement to estimate movement of vehicle 10.

Rotation of the heading of the vehicle may be detected from shift for image areas that show background scenery (scenery at a large distance from vehicle 10). Advance of the vehicle may be detected from relative differences between shifts in different image parts where objects at different distances from vehicle 10 are imaged, for example areas that show nearby objects and areas that show background. On the assumption that the objects have a fixed position, the differences between the shifts are due to movement of vehicle 10 relative to the objects, which allows movement of the vehicle to be estimated. In addition, other information may be obtained from individual images, such as information about distance to objects of known size.

In embodiment matching for the purpose of determining such incremental pose changes is performed for pairs of directly successive images only, or in pairs of images that are not more that a maximum time distance apart. When the vehicle progresses with consistent speed and heading during sampling of a limited number of images, searches for matching areas may also be performed to determine progressive offsets of matching areas in images that are only indirectly successive. This can be used to get improved estimates of movement, but only when the number of images in between is limited. Otherwise, progressive movement may make matching impossible.

Data processing circuit 14 also performs matching between the content of pairs of images that are further apart in time, to determine whether the movement of the vehicle leads to "loop closure", i.e. a return of the vehicle to a location at or near an earlier point along its trajectory, at which the images from camera 12 shows substantially the same environment. Detection of loop closure results in a closure measurement that comprises a detection of loop closure at two time values "ta" and "tb" at which vehicle 10 had reached nearly the same position, "ta" and "tb" being separated by a range of time values at which larger deviation from the position has occurred.

Optionally the closure measurement may also comprise an estimation of closure pose change "d" between the poses R(ta) and R(tb) at the two time values "ta" and "tb". In terms of positions changes R(ta)=R(tb)+d. Detection of loop closure and determination of closure pose change "d" is known per se and will therefore not be described in detail.

Data processing circuit 14 uses loop closure detection to obtain a corrected estimate of the trajectory R'(t) that is consistent with the closure measurement, i.e. so that R'(ta) at least approximately equals R'(td)+d. To realize the corrected estimate of the trajectory R'(t), improved estimates of the pose changes DR(t) along the trajectory are computed that satisfies the closure measurement. A dynamically adapted error model may be used that is based on a curvature measure of the estimated trajectory. In a human-made environment where corners and straight portions are the common thing to encounter in a trajectory, it may be expected that the straight parts occur in the trajectory.

In an embodiment an improved trajectory R'(t) is determined that is most likely in view of the closure measurement and the pose changes obtained from image matching. Herein, "most likely" can be determined in terms of an aposteriori probability distribution for possible trajectories given an a priori probability distribution for pose changes and measured pose changes DRm(ti) obtained from image matching. Such an a posteriori distribution may be expressed as a product of a term representing the closure condition and terms dependent on the measured pose changes DRm(ti). In an embodiment, the logarithms of the latter terms may expressed as

$$(DR'(ti)-DRm(ti))^2/Cov(ti)$$

Herein Cov(ti) is an assumed variance of the a priori probability distribution of changes in pose changes. In data processing circuit 14 this covariance is made dependent on measured curvature. In practical terms, the most likely set of corrected pose changes DR'(ti) may be selected by selecting a set of pose changes DR'(ti) that minimizes a sum of terms of the type shown above, under the constraint that the sum of the selected pose changes over time between ta and tb equals the closure offset "d".

When the corrections are small, a linearized solution may be used:

$$DR'(ti) = DRm(ti) + D*Cov(ti) /Norm$$

with

$$D=d- Sum\ DRm(ti)\ and\ Norm = Sum\ Cov(ti)$$

Here the sums are taken over time points between times ta and tb at the beginning and the end of the detected loop. The sum Sum DRm(ti) corresponds to the cumulatively measured pose changes between ta and tb based on successive image matching.

Figure 2 shows a flow chart of the trajectory estimation process. In a first step 21, after the vehicle has moved an image is captured. In a second step 22, a search is made in a last previously captured image for image parts that match parts of the newly captured image. In a third step 23 the results of the search are used to determine an estimated pose change Drm(ti).

In a fourth step 24, a further search is made in older images for image parts that match parts of the newly captured image. A fifth step 25 determines whether a match has been found in fourth step 24. If not, the process is repeated from first step 21.

If a match with a part of an older image for an earlier time "tb" has been found a sixth step 26 is executed to determine an offset between the current pose R(ti) and the pose R(tb) at the earlier time. In a seventh step 27 is performed to correct a part of the trajectory between tb and the time ti for which loop closure has been detected (this time ti which will be called ta to distinguish if from other time values). After seventh step 27 the process repeats from first step 21.

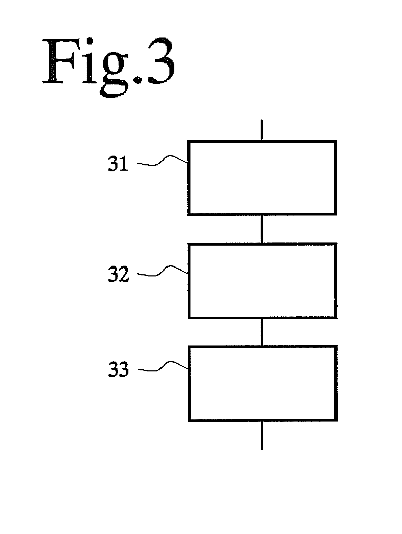

Figure 3 show a flow chart of correction of the trajectory between two time points ta, tb for which it has been detected that a loop closure relation R(ta)=R(tb)+d exists. In a first step 31 curvature values along the trajectory between the time points ta and tb are computed from the estimated pose changes DRm(ti). Any one of a number of methods of computing curvature may be used.

In an embodiment Heading-Based-Curvature (HBC) is used. We define Heading Based Curvature (HBC) as the weighted average change in heading, with a weight factor that decreases as a function of distance from the time for which curvature is determined. A weight that decays linearly with time may be used for example. This measure allows the identification of curves and corners in the trajectory. Its purpose is the evaluation of the performance in the estimation of the trajectory at a local level.

In principle the heading may be derived from an estimate of the trajectory of positions of the vehicle, but it is preferred to use direct heading or heading change measurements that do not involve a prior determination of a trajectory of positions. In an embodiment a heading sensor, such as an electronic compass may be provided in vehicle 10 and data processing circuit 14 may be configured to compute curvature from changes in heading measured by the heading sensor. In another embodiment, heading changes may be derived by data processing circuit 14 from a comparison between successive images. Data processing circuit 14 may be configured to determine shift in the position where matching background areas are found in successive images and to estimate a heading change from this shift.

In the HBC based embodiment data processing circuit 14 may be configured to use heading values determined for successive time points, or heading changes, to determine the heading based curvature (HBC). Instead of heading based curvature an estimate of the trajectory of positions of the vehicle, may be used. In this case data processing circuit 14 may be configured to fit a curve to a trajectory part as a function of time and to determine curvature from the fitted curve. The curve may be a circle with adaptable centre and radius and the fitted radius of the circle may be used as a measure of curvature. However, this may require more computations and produces a less robust result.

In general terms, it is preferred that the curvature estimate should weigh measurements to emphasize consistent effects in measurements for a range of time points that is longer than the time scale at which local swerving of vehicle 10 occurs. Thus only consistent bends in the trajectory contribute significantly to the estimate of curvature, whereas local swerving with zero or small net effect on heading has little or no effect.

In a second step 32 the curvature values are used to determine weight values for different time points ti between ta and tb. In an embodiment, weight values may be determined according to

$$\mathrm{Cov(ti) = Ro^*(C(ti)+1)^2}$$

Herein Cov(ti) may be regarded as a variance of an a priori probability function of position changes, for use in a maximum likelihood estimation. In an embodiment, the expression for Cov(ti) may be multiplied by an additional factor that accounts for the density of measurements at ti (e.g. the number of measurements of DRm(tj) values for time points tj within a time window of time points within a predetermined distance from ti, or a count of measurements weighted by a weight function that peaks at ti). By increasing Cov(ti) when the measurement density is smaller, the resulting reduced reliability of the curvature can be accounted for.

In an embodiment the position changes DR'(ti) are estimated according to

$$\mathrm{DR'(ti) = DRm(ti) + D^*Cov(ti)\,/Norm}$$

with

$$\mathrm{D=d\text{-} Sum\ DRm(ti)\ and\ Norm = Sum\ Cov(ti)}$$

In a third step 33 a set of pose changes is selected for time points ti between ta and tb that minimizes the sum of terms (DR(ti)-DRm(ti))$^2$/Cov(ti) under the constraint that the sum of the selected pose changes equals "d", the offset between the poses at time points ta and tb.

As will be appreciated, this type of correction tends to concentrate the corrections at time points where most curvature is detected, i.e. where Cov(ti) is largest. In contrast, the correction sticks more closely to estimated pose changes DRm(ti) at time points where no curvature is detected. This is based on the insight that measurement indicating low curvature are more likely to be correct in a man made environment with straight roads.

It may be noted that the actual value of "d" only has a small effect on the size of the corrections of individual pose change estimates between the time points ta, tb, other than ensuring consistency at loop closure. In an embodiment a determination of "d" may be omitted and a zero value may be used instead.

Although an example has been given using one expression for relating the curvature to the covariance, it should be emphasized that expressions for the covariance can be obtained with many variants of this expression, as long as the covariance increases with curvature. Similarly, although an expression for heading based curvature has been used wherein the curvature is proportional to heading changes, it should be appreciated that other expressions may be used, as long as the measure of curvature increases with increasing heading changes.

Although an embodiment has been described wherein a data processing circuit 14 in vehicle 10 is used to compute the trajectory, to compute curvature and to compute trajectory corrections, as well as to perform image matching of necessary, it should be appreciated that these functions may be performed outside vehicle 10. For this purpose vehicle 10 may be provided with a transmitter to transmit the necessary data to the external data processing circuit. In another embodiment the data processing circuit may be distributed, part being located in vehicle 10 and part elsewhere.

Data processing circuit 14 may be realized as a computer or set of computers with a program to make the computer or computer perform matching, trajectory computation and trajectory correction.

**EP 2 199 982 A1**

**Claims**

1. A method of measuring a trajectory of a vehicle, the method comprising

   - determining a first estimate of the trajectory from measurements that provide temporally localized indications of position changes of the vehicle;
   - capturing images from the vehicle along the trajectory;
   - searching for images with matching content to detect closure of a loop in the trajectory and to determine a first and second time points at the start and end of the detected loop;
   - computing a measure of curvature of the trajectory as a function of time at least between the first and second time points;
   - determining a second estimate of the trajectory with corrections of position changes in the first estimate, to make the second estimate consistent with the detected loop, said determining the second estimate comprising distributing the corrections of the position changes over a time interval between the first and second time point, with a distribution density at least partly controlled by the measure of curvature.

2. A method according to claim 1, comprising measuring heading and/or heading changes of the vehicle, said step of computing the measure of curvature comprising computing the measure of curvature from the measured heading and/or heading changes.

3. A method according to claim 1, wherein positions in the second estimate are determined as most likely values according to an a priori likelihood function for the position changes, the method comprising adapting the a priori likelihood function dependent on the measure of curvature, making the a priori likelihood function depend on differences between the positions in the first and second estimate, each normalized by a standard deviation that increases with increased measure of curvature for the time associated with the position.

4. A data collection system, comprising

   - a vehicle and an image capture device carried by the vehicle;
   - a data processing circuit coupled to the image capture device and configured to
   - search among images captured by the image capture device, for images with matching content to detect closure of a loop in the trajectory and to
   - determine a first and second time points at the start and end of the detected loop; to
   - compute a measure of curvature of the trajectory as a function of time at least between the first and second time points; to
   - determine a second estimate of the trajectory with corrections of position changes in the first estimate, to make the second estimate consistent with the detected loop, the determination of the second estimate comprising distributed over a time interval between the first and second time point with a distribution density at least partly controlled by the measure of curvature.

5. A system according to claim 4, comprising a heading or heading change sensor, the data processing circuit being configured to compute said measure of curvature from the sensor result of the heading or heading change sensor.

6. A system according to claim 4, wherein the data processing circuit is configured to match at least parts of the contents of successive images to determine shift of matching parts, and to compute said measure of curvature from said shifts.

Fig.1

Fig.2

# Fig.3

Europäisches
Patentamt

European
Patent Office

Office européen
des brevets

# EUROPEAN SEARCH REPORT

**Application Number**

EP 08 17 2389

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ANDREAS NÜCHTER ET AL: "Heuristic-Based Laser Scan Matching for Outdoor 6D SLAM" KI 2005: ADVANCES IN ARTIFICIAL INTELLIGENCE LECTURE NOTES IN COMPUTER SCIENCE;LECTURE NOTES IN ARTIFICIAL INTELLIG ENCE;LNCS, SPRINGER, BERLIN, DE, vol. 3698, 1 January 2005 (2005-01-01), pages 304-319, XP019018299 ISBN: 978-3-540-28761-2 * abstract * * section 3.2 * | 1-6 | INV. G06T7/20 |
| A | SCHLEICHER D ET AL: "Real-time wide-angle stereo visual SLAM on large environments using SIFT features correction" INTELLIGENT ROBOTS AND SYSTEMS, 2007. IROS 2007. IEEE/RSJ INTERNATIONAL CONFERENCE ON, IEEE, PISCATAWAY, NJ, USA, 29 October 2007 (2007-10-29), pages 3878-3883, XP031222064 ISBN: 978-1-4244-0911-2 * abstract * * section III.B * * figures 2,3 * | 1-6 | |
| A | KONOLIGE K ET AL: "Frame-Frame Matching for Realtime Consistent Visual Mapping" ROBOTICS AND AUTOMATION, 2007 IEEE INTERNATIONAL CONFERENCE ON, IEEE, PI, 10 April 2007 (2007-04-10), pages 2803-2810, XP031389221 ISBN: 978-1-4244-0601-2 * abstract * * section IV.B * | 1-6 | |

TECHNICAL FIELDS
SEARCHED (IPC)

G06T

-/--

The present search report has been drawn up for all claims

| Place of search | Date of completion of the search | Examiner |
|---|---|---|
| Munich | 13 May 2009 | Engels, Angela |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**EUROPEAN SEARCH REPORT**

Application Number

EP 08 17 2389

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MORENO L ET AL: "Differential evolution approach to the grid-based localization and mapping problem" INTELLIGENT ROBOTS AND SYSTEMS, 2007. IROS 2007. IEEE/RSJ INTERNATIONAL CONFERENCE ON, IEEE, PISCATAWAY, NJ, USA, 29 October 2007 (2007-10-29), pages 3479-3484, XP031221973 ISBN: 978-1-4244-0911-2 * abstract * * section V.C and V.D * | 1-6 | |
| A | LITTLE J J ET AL: "Vision-Based Global Localization and Mapping for Mobile Robots" IEEE TRANSACTIONS ON ROBOTICS, IEEE SERVICE CENTER, PISCATAWAY, NJ, US, vol. 21, no. 3, 1 June 2005 (2005-06-01), pages 364-375, XP011132944 ISSN: 1552-3098 * abstract * * section VII. * * figure 10 * | 1-6 | TECHNICAL FIELDS SEARCHED (IPC) |
| A | NEWMAN P ET AL: "Outdoor SLAM using visual appearance and laser ranging" ROBOTICS AND AUTOMATION, 2006. ICRA 2006. PROCEEDINGS 2006 IEEE INTERN ATIONAL CONFERENCE ON ORLANDO, FL, USA MAY 15-19, 2006, PISCATAWAY, NJ, USA,IEEE, 15 May 2006 (2006-05-15), pages 1180-1187, XP010921431 ISBN: 978-0-7803-9505-3 * abstract * * section IV. * | 1-6 | |

The present search report has been drawn up for all claims

| Place of search | Date of completion of the search | Examiner |
|---|---|---|
| Munich | 13 May 2009 | Engels, Angela |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **T. Bailey ; H. Durrant-Whyte.** Simultaneous Localization and Mapping. *Robotics and Automation Magazine,* 2006

- Exactly sparse delayed state filters for view based SLAM. **R.Eustice ; J.Leonard ; H Singh.** IEEE Transactions on robotics. 2006